Europäisches Patentamt

European Patent Office

Office européen des brevets

(19)

(11) **EP 1 475 710 A1**

(12) **EUROPEAN PATENT APPLICATION**

(43) Date of publication:
**10.11.2004 Bulletin 2004/46**

(51) Int Cl.7: **G06F 9/50**

(21) Application number: **04252690.5**

(22) Date of filing: **07.05.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **09.05.2003 US 469558 P
03.02.2004 US 771827**

(71) Applicant: **Sun Microsystems, Inc.
Santa Clara, California 95054 (US)**

(72) Inventors:
• **Leonard, Ozgur C
San Mateo, CA 94402 (US)**
• **Tucker, Andrew G
Menlo Park, CA 95025 (US)**
• **Dorofeev, Andrei V
San Jose, CA 95129 (US)**

(74) Representative: **Davies, Simon Robert
D Young & Co
120 Holborn
London, EC1N 2DY (GB)**

(54) **Method and system for controlling multi-level computing resource scheduling in operation system partitions**

(57)     A mechanism is provided for implementing multi-level computing resource scheduling control in operating system partitions. In one implementation, one or more partitions may be established within a global operating system environment provided by an operating system. Each partition may have one or more groups of one or more processes executing therein. Each partition may have associated therewith a partition share value, which indicates what portion of the computing resources provided by a processor set has been allocated to the partition as a whole. Each group of one or processes may have associated therewith a process group share value, which indicates what portion of the computing resources allocated to the partition has been allocated to that group of processes. Once properly associated, the partition share value and the process group share value may be used to control the scheduling of work onto the processor set.

Fig. 3

EP 1 475 710 A1

**Description**

**Field of the Invention**

The present invention relates to computer systems, and in particular to scheduling resources in such systems.

**Background of the Invention**

In many computer implementations, it is desirable to be able to specify what portion of a set of computing resources may be consumed by which entities. For example, it may be desirable to specify that a certain group of applications is allowed to consume an X portion of a set of computing resources (e.g. processor cycles), while another group of applications is allowed to consume a Y portion of the computing resources. This ability to allocate computing resources to specific entities enables a system administrator to better control how the computing resources of a system are used. This control may be used in many contexts to achieve a number of desirable results, for example, to prevent certain processes from consuming an inordinate amount of computing resources, to enforce fairness in computing resource usage among various entities, to prioritize computing resource usage among different entities, etc. Current systems allow certain computing resources to be allocated to certain entities. For example, it is possible to associate certain processors with certain groups of applications. However, the level of control that is possible with current systems is fairly limited.

**Summary of the Invention**

In accordance with one embodiment of the present invention, there is provided a mechanism for implementing multi-level computing resource scheduling control in operating system partitions. With this mechanism, it is possible to control how computing resources are used and scheduled at multiple levels of an operating system environment.

In one embodiment, one or more partitions may be established within a global operating system environment provided by an operating system. Each partition serves to isolate the processes running within that partition from the other partitions within the global operating system environment. Each partition may have one or more groups of one or more processes executing therein.

Each partition may have associated therewith a partition share value, which indicates what portion of the computing resources provided by a processor set has been allocated to the partition as a whole. In one embodiment, multiple partitions may share a processor set, and a processor set may comprise one or more processors. In one embodiment, the partition share value is assigned by a global administrator. By specifying a partition share value for a partition, the global administrator is in effect specifying what portion of the computing resources provided by the processor set is available to all of the processes within that partition.

In one embodiment, each group of one or processes executing within a partition may also have associated therewith a process group share value. This value indicates what portion of the computing resources allocated to the partition as a whole has been allocated to that group of processes. In one embodiment, the process group share value is assigned by a partition administrator responsible for administering the partition. In effect, the process group share value allows the partition administrator to specify how the portion of processing resources allocated to the partition is to be divided among one or more groups of processes executing within the partition.

Once properly associated, the partition share value and the process group share value may be used to control the scheduling of work onto the processor set. More specifically, during operation, a process within a group of processes within a partition may have a set of work that needs to be assigned to the processor set for execution. In one embodiment, this set of work is scheduled for execution on the processor set in accordance with a priority. In one embodiment, this priority is determined based upon a number of factors, including the process group share value associated with the group of processes of which the process is a part, and the partition share value associated with the partition in which the group of processes is executing. In one embodiment, usage history of the processing resources provided by the processor set may also be used to determine the priority.

Such an approach enables the use and scheduling of computing resources to be controlled at multiple levels. More specifically, the global administrator can control (or at least affect) scheduling at the partition level by setting the partition share value. Similarly, the partition administrator can control (or at least affect) scheduling at the process group level by setting the process group share value. This ability to control computing resource scheduling at multiple levels makes it possible to exercise better control over how computing resources are used in a computer system.

**Brief Description of the Drawings**

Various embodiments of the invention will now be described in detail by way of example only with reference to the following drawings:

FIG. 1 is a functional diagram of an operating system environment comprising a global zone and one or more non-global zones, in accordance with one embodiment of the present invention;

FIG. 2 is a functional diagram of an operating system environment comprising a global zone and one or more non-global zones containing projects and sharing processor sets, in accordance with one embodiment of the present invention;

FIG. 3 is a functional diagram of an operating system environment comprising a global zone and one or more non-global zones with zone share settings and projects with share settings, in accordance with one embodiment of the present invention;

FIG. 4 is a functional diagram that graphically illustrates zones sharing a processor set and projects within zones sharing zone shares, in accordance with one embodiment of the present invention;

FIG. 5 is a functional diagram that graphically illustrates projects within zones sharing a total allocated amount of processor shares, in accordance with one embodiment of the present invention;

FIG. 6 is a functional diagram that illustrates a task level viewpoint of one embodiment of the present invention that determines the priority of processes and their work requests, in accordance with one embodiment of the present invention;

FIG. 7 is a flowchart illustrating the determination of process priorities, in accordance with one embodiment of the present invention;

FIG. 8 is a block diagram that illustrates a computer system; and

Fig. 9 is an operational flow diagram, which provides a high level overview of one embodiment of the present invention.

**Detailed Description**

Conceptual Overview

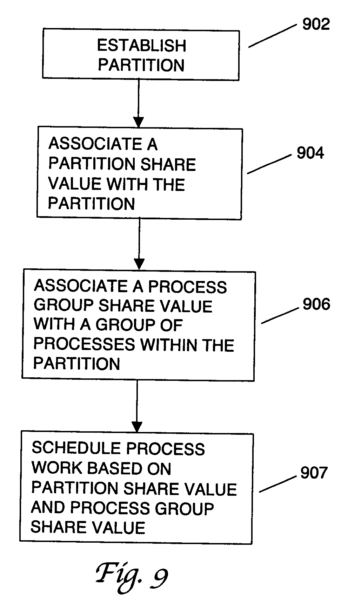

In accordance with one embodiment of the present invention, there is provided a mechanism for implementing multi-level computing resource scheduling control in operating system partitions. With this mechanism, it is possible to control how computing resources are used and scheduled at multiple levels of an operating system environment. An operational flow diagram, which provides a high level overview of this embodiment, is shown in Fig. 9.

In one embodiment, one or more partitions may be established (block 902) within a global operating system environment provided by an operating system. Each partition serves to isolate the processes running within that partition from the other partitions within the global operating system environment. Each partition may have one or more groups of one or more processes executing therein.

Each partition may have associated (block 904) therewith a partition share value, which indicates what portion of the computing resources provided by a processor set has been allocated to the partition as a whole. In one embodiment, multiple partitions may share a processor set, and a processor set may comprise one or more processors. In one embodiment, the partition share value is assigned by a global administrator. By specifying a partition share value for a partition, the global administrator is in effect specifying what portion of the computing resources provided by the processor set is available to all of the processes within that partition.

In one embodiment, each group of one or more processes executing within a partition may also have associated (block 906) therewith a process group share value. This value indicates what portion of the computing resources allocated to the partition as a whole has been allocated to that group of processes. In one embodiment, the process group share value is assigned by a partition administrator responsible for administering the partition. In effect, the process group share value allows the partition administrator to specify how the portion of processing resources allocated to the partition is to be divided among one or more groups of processes executing within the partition.

Once properly associated, the partition share value and the process group share value may be used to control the scheduling of work onto the processor set. More specifically, during operation, a process within a group of processes within a partition may have a set of work that needs to be assigned to the processor set for execution. In one embodiment, this set of work is scheduled (block 907) for execution on the processor set in accordance with a priority. In one embodiment, this priority is determined based upon a number of factors, including the process group share value associated with the group of processes of which the process is a part, and the partition share value associated with the partition in which the group of processes is executing. In addition, usage history of the processing resources provided by the processor set may also be used to determine the priority.

In one embodiment, work is scheduled in the following manner. When it comes time to schedule a set of work from a particular process within a particular process group within a particular partition, the process group share value associated with the particular process group is accessed. As noted above, this value indicates the portion of processing resources that have been allocated to the particular process group.

A processing resource usage history of the particular process group is then either accessed or determined. This resource history provides an indication of how much processing resource has been consumed over time by all of the processes in the particular process group. Comparing the processing resource usage history and the process group share value, a determination is made as to whether the processes in the particular process group have consumed up to the portion of processing resources that have been allocated to the particular process group. If so (thereby indicating that the particular process group has reached its limit of processing resource usage), the set of work from the particular process is assigned a lower priority and scheduled accordingly. This may, in effect, cause the particular process to have to wait to have its work executed.

On the other hand, if the processes in the particular process group have not consumed up to the portion of processing resources that have been allocated to the particular process group, then a further determination is made. This determination inquires whether all of the processes in all of the process groups in the particular partition have consumed up to the portion of processing resources that have been allocated to the particular partition as a whole. In one embodiment, this determination is made by accessing the partition share value associated with the particular partition, accessing or determining a processing resource usage history for the particular partition (this resource history provides an indication of how much processing resource has been consumed over time by all of the processes in the particular partition), and comparing the partition share value with the processing resource usage history. If this comparison indicates that the processes in the particular partition have consumed up to the portion of processing resources that have been allocated to the particular partition (thereby indicating that the particular partition has reached its limit of processing resource usage), then the set of work from the particular process is assigned a lower priority and scheduled accordingly. This again may cause the particular process to have to wait to have its work executed.

On the other hand, if the comparison indicates that the processes in the particular partition have not consumed up to the portion of processing resources that have been allocated to the particular partition, then it means that neither the particular process group nor the particular partition have reached their processing resource limits. In such a case, a higher priority is assigned to the set of work, and the set of work is scheduled accordingly. This allows the set of work to be scheduled in line with other sets of work, or even ahead of other sets of work. In this manner, a set of work is scheduled.

From the above discussion, it is clear that in this embodiment of the present invention the use and scheduling of computing resources may be controlled at multiple levels. More specifically, the global administrator can control (or at least affect) scheduling at the partition level by setting the partition share value. Similarly, the partition administrator can control (or at least affect) scheduling at the process group level by setting the process group share value. This ability to control computing resource scheduling at multiple levels makes it possible to exercise better control over how computing resources are used in a computer system.

The above discussion provides a high level overview of one embodiment of the present invention. Various aspects will now be described in greater detail in the following sections.

System Overview

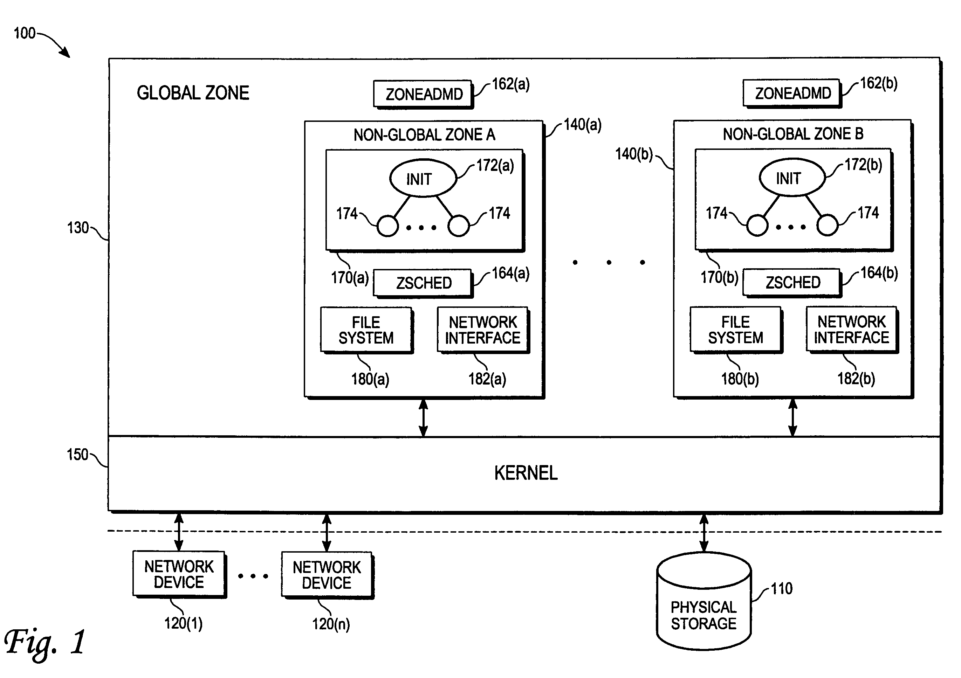

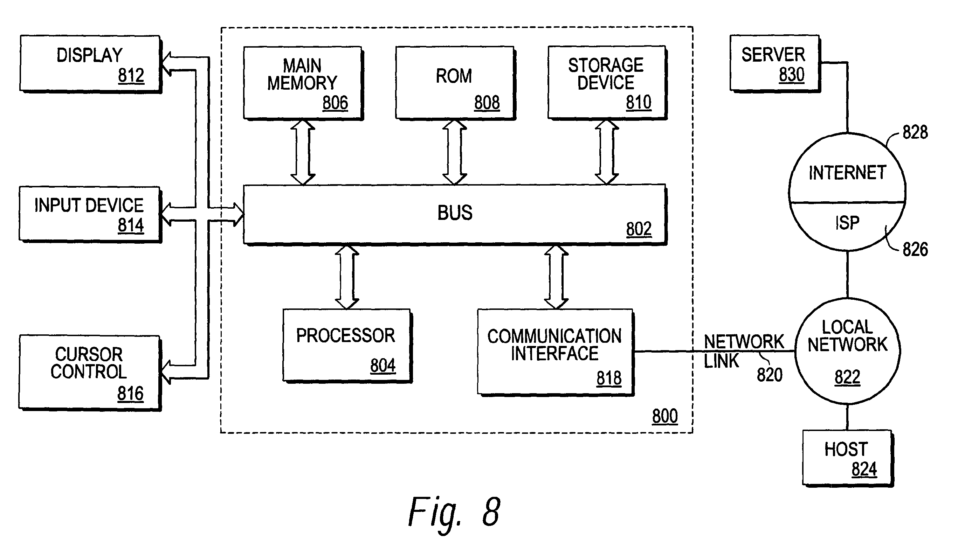

Fig. 1 illustrates a functional block diagram of an operating system (OS) environment 100 in accordance with one embodiment of the present invention. OS environment 100 may be derived by executing an OS in a general-purpose computer system, such as computer system 800 illustrated in Fig. 8, for example. For illustrative purposes, it will be assumed that the OS is the Solaris operating system from Sun Microsystems, Inc. of Santa Clara, California (Solaris is a trademark of Sun Microsystems, Inc). However, it should be noted that the concepts taught herein may be applied to any OS, including but not limited to Unix, Linux, Windows, MacOS, etc.

As shown in Fig. 1, OS environment 100 may comprise one or more zones (also referred to herein as partitions), including a global zone 130 and zero or more non-global zones 140. The global zone 130 is the general OS environment that is created when the OS is booted and executed, and serves as the default zone in which processes may be executed if no non-global zones 140 are created. In the global zone 130, administrators and/or processes having the proper rights and privileges can perform generally any task and access any device/resource that is available on the computer system on which the OS is run. Thus, in the global zone 130, an administrator can administer the entire computer system. In one embodiment, it is in the global zone 130 that an administrator executes processes to configure and to manage the non-global zones 140.

The non-global zones 140 represent separate and distinct partitions of the OS environment 100. One of the purposes of the non-global zones 140 is to provide isolation. In one embodiment, a non-global zone 140 can be used to isolate a number of entities, including but not limited to processes 170, one or more file systems 180, and one or more logical network interfaces 182. Because of this isolation, processes 170 executing in one non-global zone 140 cannot access or affect processes in any other zone. Similarly, processes 170 in a non-global zone 140 cannot access or affect the file system 180 of another zone, nor can they access or affect the network interface 182 of another zone.

As a result, the processes 170 in a non-global zone 140 are limited to accessing and affecting the processes and entities in that zone. Isolated in this manner, each non-global zone 140 behaves like a virtual standalone computer. While processes 170 in different non-global zones 140 cannot access or affect each other, it should be noted that they may be able to communicate with each other via a network connection through their respective logical network interfaces 182. This is similar to how processes on separate standalone computers communicate with each other.

Having non-global zones 140 that are isolated from each other may be desirable in many applications. For example, if a single computer system running a single instance of an OS is to be used to host applications for different competitors (e.g. competing websites), it would be desirable to isolate the data and processes of one competitor from the data and processes of another competitor. That way, it can be ensured that information will not be leaked between the competitors. Partitioning an OS environment 100 into non-global zones 140 and hosting the applications of the competitors in separate non-global zones 140 is one possible way of achieving this isolation.

In one embodiment, each non-global zone 140 may be administered separately. More specifically, it is possible to assign a zone administrator to a particular non-global zone 140 and grant that zone administrator rights and privileges to manage various aspects of the non-global zone 140. With such rights and privileges, the zone administrator can perform any number of administrative tasks that affect the processes and other entities within the non-global zone 140. However, the zone administrator cannot change or affect anything in any other non-global zone 140 or the global zone 130. Thus, in the above example, each competitor can administer his/her zone, and hence, his/her own set of applications, but cannot change or affect the applications of a competitor. In one embodiment, to prevent a non-global zone 140 from affecting other zones, the entities in a non-global zone 140 are generally not allowed to access or control any of the physical devices of the computer system.

In contrast to a non-global zone administrator, a global zone administrator with proper rights and privileges may administer all aspects of the OS environment 100 and the computer system as a whole. Thus, a global zone administrator may, for example, access and control physical devices, allocate and control system resources, establish operational parameters, etc. A global zone administrator may also access and control processes and entities within a non-global zone 140.

In one embodiment, enforcement of the zone boundaries is carried out by the kernel 150. More specifically, it is the kernel 150 that ensures that processes 170 in one non-global zone 140 are not able to access or affect processes 170, file systems 180, and network interfaces 182 of another zone (non-global or global). In addition to enforcing the zone boundaries, kernel 150 also provides a number of other services. These services include but are not limited to mapping the network interfaces 182 of the non-global zones 140 to the physical network devices 120 of the computer system, and mapping the file systems 180 of the non-global zones 140 to an overall file system and a physical storage 110 of the computer system. The operation of the kernel 150 will be discussed in greater detail in a later section.

Non-Global Zone States

In one embodiment, a non-global zone 140 may take on one of four states: (1) Configured; (2) Installed; (3) Ready; and (4) Running. When a non-global zone 140 is in the Configured state, it means that an administrator in the global zone 130 has invoked an operating system utility (in one embodiment, zonecfg(1m)) to specify all of the configuration parameters of a non-global zone 140, and has saved that configuration in persistent physical storage 110. In configuring a non-global zone 140, an administrator may specify a number of different parameters. These parameters may include, but are not limited to, a zone name, a zone path to the root directory of the zone's file system 180, specification of one or more file systems to be mounted when the zone is created, specification of zero or more network interfaces, specification of devices to be configured when the zone is created, zone shares for processes, and zero or more resource pool associations.

Once a zone is in the Configured state, a global administrator may invoke another operating system utility (in one embodiment, zoneadm(1m)) to put the zone into the Installed state. When invoked, the operating system utility interacts with the kernel 150 to install all of the necessary files and directories into the zone's root directory, or a subdirectory thereof.

To put an Installed zone into the Ready state, a global administrator invokes an operating system utility (in one embodiment, zoneadm(1m) again), with a zoneadmd process 162 to be started (there is a zoneadmd process associated with each non-global zone). In one embodiment, zoneadmd 162 runs within the global zone 130 and is responsible for managing its associated non-global zone 140. After zoneadmd 162 is started, it interacts with the kernel 150 to establish the non-global zone 140. In establishing a non-global zone 140, a number of operations may be performed, including but not limited to assigning a zone ID, starting a zsched process 164 (zsched is a kernel process; however, it runs within the non-global zone 140, and is used to track kernel resources associated with the non-global zone 140), mounting file systems 180, plumbing network interfaces 182, configuring devices, and setting resource controls. These and other operations put the non-global zone 140 into the Ready state to prepare it for normal operation.

Putting a non-global zone 140 into the Ready state gives rise to a virtual platform on which one or more processes may be executed. This virtual platform provides the infrastructure necessary for enabling one or more processes to be executed within the non-global zone 140 in isolation from processes in other non-global zones 140. The virtual platform also makes it possible to isolate other entities such as file system 180 and network interfaces 182 within the non-global zone 140, so that the zone behaves like a virtual standalone computer. Notice that when a non-global zone 140 is in the Ready state, no user or non-kernel processes are executing inside the zone (recall that zsched is a kernel process, not a user process). Thus, the virtual platform provided by the non-global zone 140 is independent of any processes executing within the zone. Put another way, the zone (and hence the virtual platform) exists even if no user or non-kernel processes are executing within the zone. This means that a non-global zone 140 can remain in existence from the time it is created until either the zone or the OS is terminated. The life of a non-global zone 140 need not be limited to the duration of any user or non-kernel process executing within the zone.

After a non-global zone 140 is in the Ready state, it can be transitioned into the Running state by executing one or more user processes in the zone. In one embodiment, this is done by having zoneadmd 162 start an init process 172 in its associated zone. Once started, the init process 172 looks in the file system 180 of the non-global zone 140 to determine what applications to run. The init process 172 then executes those applications to give rise to one or more other processes 174. In this manner, an application environment is initiated on the virtual platform of the non-global zone 140. In this application environment, all processes 170 are confined to the non-global zone 140; thus, they cannot access or affect processes, file systems, or network interfaces in other zones. The application environment exists so long as one or more user processes are executing within the non-global zone 140.

After a non-global zone 140 is in the Running state, its associated zoneadmd 162 can be used to manage it. Zoneadmd 162 can be used to initiate and control a number of zone administrative tasks. These tasks may include, for example, halting and rebooting the non-global zone 140. When a non-global zone 140 is halted, it is brought from the Running state down to the Installed state. In effect, both the application environment and the virtual platform are terminated. When a non-global zone 140 is rebooted, it is brought from the Running state down to the Installed state, and then transitioned from the Installed state through the Ready state to the Running state. In effect, both the application environment and the virtual platform are terminated and restarted. These and many other tasks may be initiated and controlled by zoneadmd 162 to manage a non-global zone 140 on an ongoing basis during regular operation.

Multi-Level Computing Resource Scheduling Control

In one embodiment, a global zone administrator (also referred to herein as a global administrator) administers the allocation of processor (CPU) resources (also referred to herein as processing resources) to zones. Zones are assigned shares (referred to herein as zone or partition shares) of processor time that are enforced by the kernel 150.

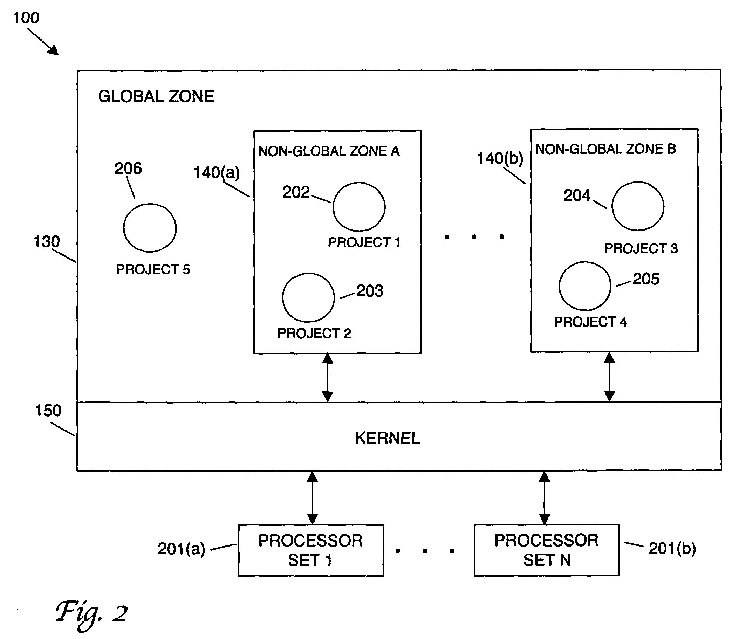

Fig. 2 illustrates a functional diagram of the OS environment 100 with zones 140 sharing processor resources (sets) 201. A multi-processor machine can have its processors grouped to serve only certain zones. A single-processor machine will have one processor set. A processor set 201 contains any number of processors grouped into a set. These processor sets 201 are shared among zones 130, 140 for executing processes. The global zone administrator groups processors into groups 201 and assigns zones 130, 140 to processor sets 201. A zone 130, 140 can share processor sets 201 with other zones or it may be assigned its own single or multiple processor sets.

As noted above, zones contain processes. The global zone administrators and non-global zone administrators (also referred to herein as a partition administrator) have the ability to define an abstract called a project in a zone to group processes. Each project 202-206 may comprise one or more processes (thus, a project may be viewed as a group of one or more processes). Each zone 130, 140 can contain one or more projects. In this example, zone A 140 (a) contains Project 1 202 and Project 2 203, zone B 140(b) contains Project 3 204 and Project 4 205, and the global zone 130 contains Project 5 206.

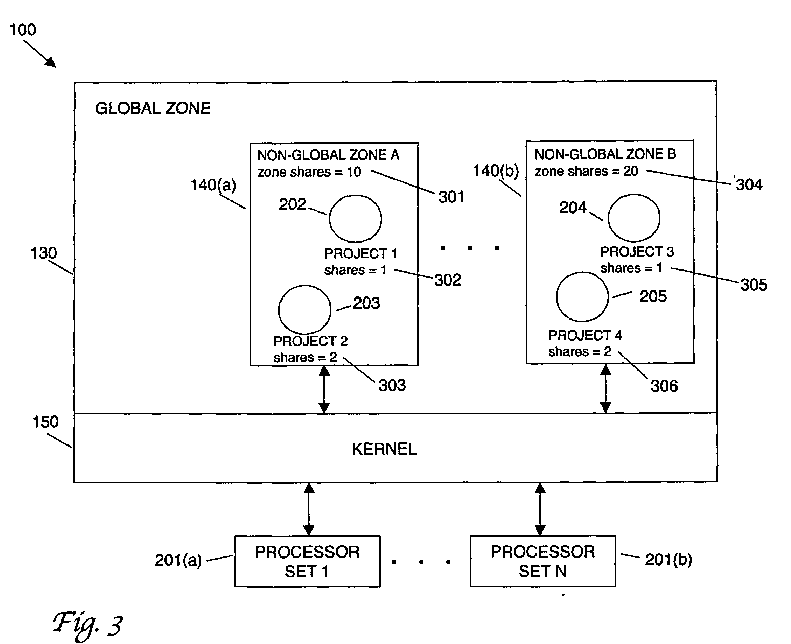

Referring to Fig. 3, in one embodiment, zones and projects are assigned shares. A global zone administrator assigns zone shares 301, 304 to zones 140. If the global zone contains projects, the global zone administrator assigns a zone share to the global zone 130. The global zone is treated in the same manner as a non-global zone explained in this example.

In one embodiment, a zone share may be any desired number that is assigned to a zone to indicate how much of a share of a particular processor set the zone is allocated. The number is interpreted in relation to the sum of such zone shares for the processor set of interest as the ratio of total CPU time on the processor set to be consumed by the zone. Alternatively, the number can represent a percentage of total CPU time on the processor set that is allocated to the zone.

For this example, it is easier to describe the fundamentals of the embodiment by assuming that a single processor set is being shared among the zones. However, the concept is easily expanded to multiple processor sets.

The zone shares dictate the total amount of processor share that a zone is allocated for that particular processor set. The non-global zone administrators can assign shares 302, 303, 305, 306 within a zone to projects 202-205.

In this example, the global zone administrator has assigned zone A 140(a) a zone share of 10 and zone B 140(b) a zone share of 20. The average processor share assigned to the zones are a ratio of the zone share values:

$$\text{processor share} = \frac{\text{zone share}}{\text{total zone shares}}$$

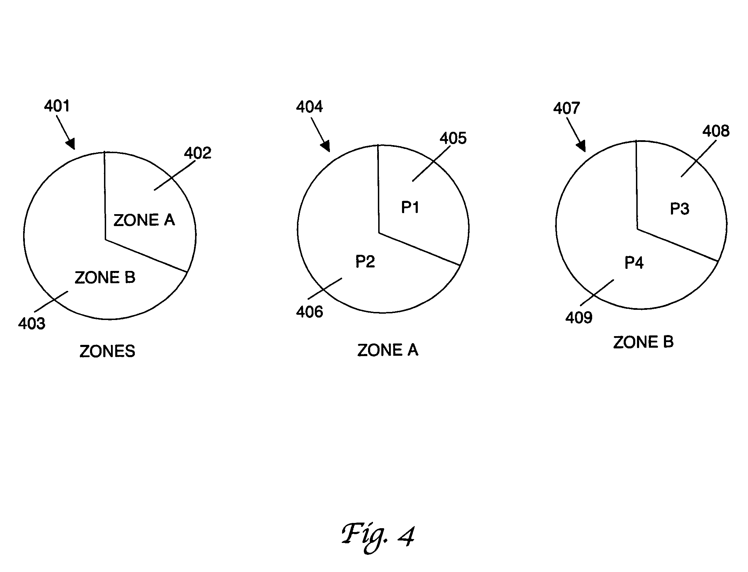

Given that the two zones are the only zones operating in this example, Fig. 4 shows that, of the total amount of time that a particular processor set is available 401, zone A 403 is allocated 1/3 of the processor time (10/(10+20)) 403 and zone B is allocated 2/3 of the processor time (20/(10+20)) 402.

A non-global administrator can allocate shares to projects within a non-global zone. The global administrator assigns shares to projects within the global zone. The share value may be any desired value that indicates the project's share of the zone's assigned zone share. It can also be a percentage value that represents a percentage of the zone's assigned zone share that the project is assigned. The project's average share relative to the other projects within a zone is a ratio:

$$\text{project share} = \frac{\text{share value}}{\text{total share values}}$$

In this example, Project 1 202 has been assigned a share of 1 and Project 2 203 has been assigned a share of 2. Fig. 4 shows that, of the total zone share allocated to zone A 404, Project 1 202 has a 1/3 share (1/(1+2)) 405 and Project 2 203 has a 2/3 share (2/(1+2)) 406. Project 3 204 has been assigned a share of 1 and Project 4 205 has been assigned a share of 2. Fig. 4 shows that, of the total zone share allocated to zone B 407, Project 3 204 has a 1/3 share (1/(1+2)) 408 and Project 4 205 has a 2/3 share (2/(1+2)) 409.

The values used can also be percentages. For example, if Project 1 202 were assigned 33.3 % and Project 2 203 were assigned 66.6 %, then the same results would be achieved. Percentages can be used alone or can be used for one level, e.g., for projects, mixed with arbitrary numbers at another level, e.g., zones. The calculated ratios will remain consistent.

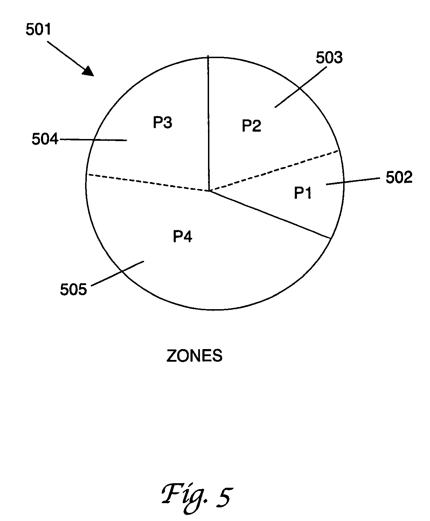

Fig. 5 illustrates each project's share of the total amount of processor time allocated between the zones 501. A project's average share of the total zone allocation for a particular processor set is calculated using:

$$\text{ptotal} = \frac{\text{project share}}{\text{total project shares or zone}} * \frac{\text{zone share}}{\text{total zone shares}}$$

Here, Project 1 has 1/9 502 of the processor time 501, Project 2 has 2/9 503 of the processor time 501, Project 3 has 2/9 504 of the processor time 501, and Project 4 has 4/9 505 of the processor time 501.

The kernel 150 stores the zone share values (also referred to herein as partition share values) entered by global zone administrators and project share values (also referred to herein as process group share values) entered by non-global zone administrators. The kernel 150 uses the values to schedule work from processes onto the processor set. In one embodiment, the kernel 150 is a priority based OS where higher priority sets of work are run before lower priority sets of work. The priority of a set of work is raised or lowered by the kernel 150 based on the amount of processor time the project and zone has consumed.

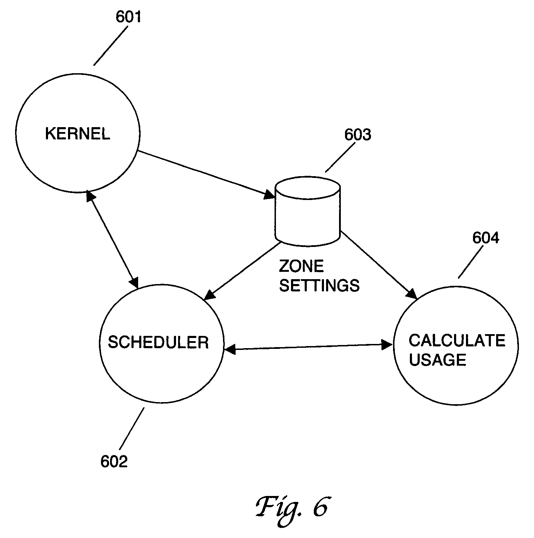

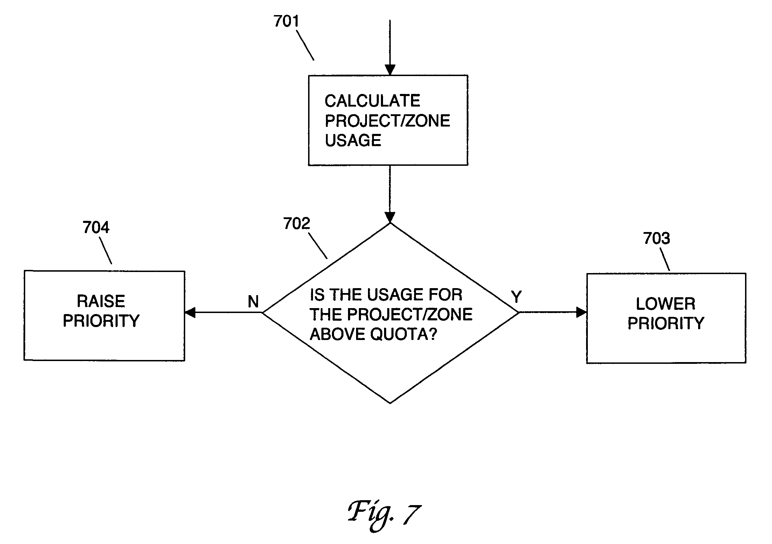

Figs. 6 and 7 illustrate one embodiment that schedules sets of work based on project and zone processor set use. The kernel 601 records global zone administrator zone share settings and non-global zone administrator project share settings in the zone settings storage 603. The kernel 601 tracks each set of work in a project by calculating the length of time that a set of work within a project has run (using clock ticks, milliseconds, etc.). The kernel 601 also tracks the total time used by each proj ect on a processor set basis. This allows the kernel 601 to keep a running tab on each project's processor set usage. The kernel 601 additionally tracks the total usage of all projects within a zone and processor set. This gives a running total of the processor time used for a given zone.

The kernel 601 manages a process execution queue for each processor set. A process queue contains processes that are waiting with requests for a set of work for a particular processor set. Each process has a priority that the kernel 601 uses to decide when each work request will run on the processor set. The process with the highest priority relative to the other processes in the queue runs its set of work on the processor set next. When a process releases a processor set, the kernel 601 begins a re-evaluation of its process queue for that processor set to adjust the process' priority in the queue. Processes that have used less of their allotted total will end up having a higher priority in the queue and those that have used a large amount of their allotted total will have a lower priority in the queue.

The kernel 601 passes the process' work request to the scheduler 602. The scheduler 602 looks up the process' usage, its project's usage, and its zone's usage all based on the processor set being used. The scheduler 602 then passes the values to the calculate usage module 604 which calculates the running total usage for the process, project, and zone 701.

As time goes by, the importance of each use becomes less significant in relation to more recent uses. Data relating to older uses are decayed using an aging algorithm. For example, one algorithm can be:

$$\text{usage} = \frac{\text{usage} * \text{DECAY VALUE}}{\text{DECAY BASE VALUE} + \text{project use count}}$$

where DECAY VALUE and DECAY BASE VALUE are constant values that allows the calculation to reduce itself at a desired rate (e.g.,, DECAY VALUE = 96 and DECAY BASE VALUE = 128).

Other methods such as a moving window can also be used to age or discard older values. A sliding window of fixed length can be used where the window extends from the present time to a fixed length of time prior to the present time. Any values that fall outside of the window as it moves forward are discarded, thereby eliminating older values.

Once the calculate usage module 604 calculates the running totals, it checks the totals against the allotted values 702 set by the global and non-global zone administrators in the zone settings storage 603. If the project is over its allocated share or the zone is over its allocated zone share, then the calculate usage module 604 lowers the priority of the process' work request in relation to other processes' work requests in the queue by subtracting a value from its priority value, multiplying its priority value by a reduction rate, or applying a reduction formula to its priority value 703. The method used is dependent upon the operation of the priority system of the OS.

If the project is under its allocated share and the zone is under its allocated zone share, then the calculate usage module 604 raises the priority of the process in relation to other processes in the queue by adding a value from its priority value, multiplying its priority value by an increasing rate, or applying a formula to raise its priority value 704. Again, the method used is dependent upon the operation of the priority system of the OS.

The calculate usage module 604 passes the resulting process priority to the scheduler 602. The scheduler 602 places the process and its work request in the queue relative to other processes' and their work requests in the queue using its new priority value. The kernel 601 executes the process' work request with the highest priority in the queue for the particular processor set.

Hardware Overview

Fig. 8 is a block diagram that illustrates a computer system 800 in which an embodiment of the invention may be implemented. Computer system 800 includes a bus 802 for facilitating information exchange, and one or more processors 804 coupled to bus 802 for processing information. Computer system 800 also includes a main memory 806, such as a random access memory (RAM) or other dynamic storage device, coupled to bus 802 for storing information and instructions to be executed by processor 804. Main memory 806 also may be used for storing temporary variables or other intermediate information during execution of instructions by processor 804. Computer system 800 may further include a read only memory (ROM) 808 or other static storage device coupled to bus 802 for storing static information and instructions for processor 804. A storage device 810, such as a magnetic disk or optical disk, is provided and coupled to bus 802 for storing information and instructions.

Computer system 800 may be coupled via bus 802 to a display 812, such as a cathode ray tube (CRT), for displaying information to a computer user. An input device 814, including alphanumeric and other keys, is coupled to bus 802 for communicating information and command selections to processor 804. Another type of user input device is cursor control 816, such as a mouse, a trackball, or cursor direction keys for communicating direction information and command selections to processor 804 and for controlling cursor movement on display 812. This input device typically has two degrees of freedom in two axes, a first axis (e.g., x) and a second axis (e.g., y), that allows the device to specify positions in a plane.

In computer system 800, bus 802 may be any mechanism and/or medium that enables information, signals, data, etc., to be exchanged between the various components. For example, bus 802 may be a set of conductors that carries electrical signals. Bus 802 may also be a wireless medium (e.g. air) that carries wireless signals between one or more of the components. Bus 802 may also be a medium (e.g. air) that enables signals to be capacitively exchanged between one or more of the components. Bus 802 may further be a network connection that connects one or more of the components. Overall, any mechanism and/or medium that enables information, signals, data, etc., to be exchanged between the various components may be used as bus 802.

Bus 802 may also be a combination of these mechanisms/media. For example, processor 804 may communicate with storage device 810 wirelessly. In such a case, the bus 802, from the standpoint of processor 804 and storage device 810, would be a wireless medium, such as air. Further, processor 804 may communicate with ROM 808 capacitively. In this instance, the bus 802 would be the medium (such as air) that enables this capacitive communication to take place. Further, processor 804 may communicate with main memory 806 via a network connection. In this case, the bus 802 would be the network connection. Further, processor 804 may communicate with display 812 via a set of conductors. In this instance, the bus 802 would be the set of conductors. Thus, depending upon how the various components communicate with each other, bus 802 may take on different forms. Bus 802, as shown in Fig. 8, functionally represents all of the mechanisms and/or media that enable information, signals, data, etc., to be exchanged between the various components.

Computer system 800 may be used to implement the techniques described herein. According to one embodiment of the invention, those techniques are performed by computer system 800 in response to processor 804 executing one or more sequences of one or more instructions contained in main memory 806. Such instructions may be read into main memory 806 from another machine-readable medium, such as storage device 810. Execution of the sequences of instructions contained in main memory 806 causes processor 804 to perform the process steps described herein. In alternative embodiments, hard-wired circuitry may be used in place of or in combination with software instructions to implement the techniques. Thus, the techniques described herein are not limited to any specific combination of hardware circuitry and software.

The term "machine-readable medium" as used herein refers to any medium that participates in providing data that causes a machine to operation in a specific fashion. In an embodiment implemented using computer system 800, various machine-readable media may be involved, for example, in providing instructions to processor 804 for execution. Such media may take many forms, including but not limited to, non-volatile media, volatile media, and transmission media. Non-volatile media include, for example, optical or magnetic disks, such as storage device 810. Volatile media include dynamic memory, such as main memory 806. Transmission media include coaxial cables, copper wire and fiber optics, including the wires that comprise bus 802. Transmission media can also take the form of acoustic or light waves, such as those generated during radio-wave or infra-red data communications.

Common forms of machine-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, an EPROM, a FLASH-EPROM, any other memory chip or cartridge, a carrier wave as described hereinafter, or any other medium from which a computer can read.

Various forms of machine-readable media may be involved in carrying one or more sequences of one or more instructions to processor 804 for execution. For example, the instructions may initially be carried on a magnetic disk of a remote computer. The remote computer can load the instructions into its dynamic memory and send the instructions over a telephone line using a modem. A modem local to computer system 800 can receive the data on the telephone line and use an infra-red transmitter to convert the data to an infra-red signal. An infra-red detector can receive the data carried in the infra-red signal and appropriate circuitry can place the data on bus 802. Bus 802 carries the data to main memory 806, from which processor 804 retrieves and executes the instructions. The instructions received by main memory 806 may optionally be stored on storage device 810 either before or after execution by processor 804.

Computer system 800 also includes a communication interface 818 coupled to bus 802. Communication interface 818 provides a two-way data communication coupling to a network link 820 that is connected to a local network 822. For example, communication interface 818 may be an integrated services digital network (ISDN) card or a modem to provide a data communication connection to a corresponding type of telephone line. As another example, communication interface 818 may be a local area network (LAN) card to provide a data communication connection to a compatible LAN. Wireless links may also be implemented. In any such implementation, communication interface 818 sends and receives electrical, electromagnetic or optical signals that carry digital data streams representing various types of information.

Network link 820 typically provides data communication through one or more networks to other data devices. For example, network link 820 may provide a connection through local network 822 to a host computer 824 or to data equipment operated by an Internet Service Provider (ISP) 826. ISP 826 in turn provides data communication services through the world wide packet data communication network now commonly referred to as the "Internet" 828. Local network 822 and Internet 828 both use electrical, electromagnetic and/or optical signals that carry digital data streams. The signals through the various networks and the signals on network link 820 and through communication interface 818, which carry the digital data to and from computer system 800, are example forms of carrier waves transporting the information.

Computer system 800 can send messages and receive data, including program code, through the network (s), network link 820 and communication interface 818. In the Internet example, a server 830 might transmit a requested code for an application program through Internet 828, ISP 826, local network 822 and communication interface 818.

The received code may be executed by processor 804 as it is received, and/or stored in storage device 810, or other non-volatile storage for later execution. In this manner, computer system 800 may obtain application code in the form of a carrier wave.

The foregoing descriptions of embodiments of the present invention have been presented for purposes of illustration in order to enable a person skilled in the art to appreciate and implement the invention. They are provided in the context of particular applications and their requirements, but are not intended to be exhaustive or to limit the present invention to the forms disclosed. Accordingly, many modifications and variations will be apparent to practitioners skilled in the art, and the scope of the present invention is defined by the appended claims and their equivalents.

**Claims**

1. A method comprising:

   establishing, within a global operating system environment provided by an operating system, a first partition which serves to isolate processes running within the first partition from other partitions within the global operating system environment;

   associating a first partition share value with the first partition, wherein the first partition share value indicates what portion of computing resources provided by a processor set has been allocated to the first partition;

   associating a first process group share value with a first group of one or more processes executing within the first partition, wherein the first process group share value indicates what portion of the computing resources allocated to the first partition has been allocated to the first group of one or more processes; and

   scheduling a set of work from one of the processes in the first group of one or more processes for execution on the processor set, wherein the set of work is scheduled in accordance with a priority determined based, at least partially, upon the first partition share value and the first process group share value.

2. The method of Claim 1, wherein a global administrator sets the first partition share value.

3. The method of Claim 1 or 2, wherein a partition administrator sets the first process group share value.

4. The method of any preceding Claim, wherein the processor set comprises one or more processors.

5. The method of any preceding Claim, wherein scheduling further comprises:

   determining, based at least partially upon usage history, whether all of the processes in the first group of one or more processes have consumed up to the portion of processing resources indicated by the first process group share value.

6. The method of Claim 5, wherein scheduling further comprises:

   in response to a determination that all of the processes in the first group of one or more processes have consumed up to the portion of processing resources indicated by the first process group share value, assigning a lower priority to the set of work.

7. The method of Claim 5, wherein scheduling further comprises:

   determining, based at least partially upon usage history, whether all of the processes in the first partition have consumed up to the portion of processing resources indicated by the first partition share value.

8. The method of Claim 7, wherein scheduling further comprises:

   in response to a determination that all of the processes in the first partition have consumed up to the portion of processing resources indicated by the first partition share value, assigning a lower priority to the set of work.

9. The method of Claim 7, wherein scheduling further comprises:

   in response to a determination that all of the processes in the first group of one or more processes have not consumed up to the portion of processing resources indicated by the first process group share value, and in response to a determination that all of the processes in the first partition have not consumed up to the portion of processing resources indicated by the first partition share value, assigning a higher priority to the set of work.

10. The method of any preceding Claim, wherein a process with a highest relative priority has its set of work executed on the processor set next.

11. The method of any preceding Claim, wherein the first partition share value represents a value that is relative to other partition share values sharing the computing resources.

**12.** The method of any of Claims 1 to 10, wherein the first partition share value represents a percentage of the computing resources allocated to the partition.

**13.** The method of any preceding Claim, wherein the first process group share value represents a value that is relative to other process group share values within the first partition sharing the computing resources.

**14.** The method of any of Claims 1 to 12, wherein the first process group share value represents a percentage of the partition's allocated computing resources that are allocated to the first group of one or more processes.

**15.** A machine-readable medium, comprising:

instructions for causing one or more processors to establish, within a global operating system environment provided by an operating system, a first partition which serves to isolate processes running within the first partition from other partitions within the global operating system environment;

instructions for causing one or more processors to associate a first partition share value with the first partition, wherein the first partition share value indicates what portion of computing resources provided by a processor set has been allocated to the first partition;

instructions for causing one or more processors to associate a first process group share value with a first group of one or more processes executing within the first partition, wherein the first process group share value indicates what portion of the computing resources allocated to the first partition has been allocated to the first group of one or more processes; and

instructions for causing one or more processors to schedule a set of work from one of the processes in the first group of one or more processes for execution on the processor set, wherein the set of work is scheduled in accordance with a priority determined based, at least partially, upon the first partition share value and the first process group share value.

**16.** A computer program comprising instructions for implementing the method of any of claims 1 to 14.

**17.** Apparatus, comprising:

a mechanism for establishing, within a global operating system environment provided by an operating system, a first partition which serves to isolate processes running within the first partition from other partitions within the global operating system environment;

a mechanism for associating a first partition share value with the first partition, wherein the first partition share value indicates what portion of computing resources provided by a processor set has been allocated to the first partition;

a mechanism for associating a first process group share value with a first group of one or more processes executing within the first partition, wherein the first process group share value indicates what portion of the computing resources allocated to the first partition has been allocated to the first group of one or more processes; and

a mechanism for scheduling a set of work from one of the processes in the first group of one or more processes for execution on the processor set, wherein the set of work is scheduled in accordance with a priority determined based, at least partially, upon the first partition share value and the first process group share value.

**18.** The apparatus of Claim 17, wherein a global administrator sets the first partition share value.

**19.** The apparatus of Claim 17 or 18, wherein a partition administrator sets the first group share value.

**20.** The apparatus of any of Claims 17 to 19, wherein the processor set comprises one or more processors.

**21.** The apparatus of any of Claims 17 to 20, wherein the mechanism for scheduling further comprises:

a mechanism for determining, based at least partially upon usage history, whether all of the processes in the first group of one or more processes have consumed up to the portion of processing resources indicated by the first process group share value.

**22.** The apparatus of Claim 21, wherein the mechanism for scheduling further comprises:

a mechanism for assigning, in response to a determination that all of the processes in the first group of one or more processes have consumed up to the portion of processing resources indicated by the first process group share value, a lower priority to the set of work.

**23.** The apparatus of Claim 21, wherein the mechanism for scheduling further comprises:

a mechanism for determining, based at least partially upon usage history, whether all of the processes in the first partition have consumed up to the portion of processing resources indicated by the first partition share value.

**24.** The apparatus of Claim 23, wherein the mechanism for scheduling further comprises:

a mechanism for assigning, in response to a determination that all of the processes in the first partition have consumed up to the portion of processing resources indicated by the first partition share value, a lower priority to the set of work.

**25.** The apparatus of Claim 23, wherein the mechanism for scheduling further comprises:

a mechanism for assigning, in response to a determination that all of the processes in the first group of one or more processes have not consumed up to the portion of processing resources indicated by the first process group share value, and in response to a determination that all of the processes in the first partition have not consumed up to the portion of processing resources indicated by the first partition share value, a higher priority to the set of work.

Fig. 1

*Fig. 2*

EP 1 475 710 A1

Fig. 3

EP 1 475 710 A1

Fig. 4

ZONES

*Fig. 5*

EP 1 475 710 A1

Fig. 6

EP 1 475 710 A1

701

```
CALCULATE
PROJECT/ZONE
USAGE
```

704

702

703

```
RAISE
PRIORITY
```
← N

```
IS THE USAGE FOR
THE PROJECT/ZONE
ABOVE QUOTA?
```
Y →
```
LOWER
PRIORITY
```

*Fig. 7*

*Fig. 8*

EP 1 475 710 A1

ESTABLISH
PARTITION — 902

ASSOCIATE A
PARTITION SHARE
VALUE WITH THE
PARTITION — 904

ASSOCIATE A PROCESS
GROUP SHARE VALUE
WITH A GROUP OF
PROCESSES WITHIN THE
PARTITION — 906

SCHEDULE PROCESS
WORK BASED ON
PARTITION SHARE VALUE
AND PROCESS GROUP
SHARE VALUE — 907

Fig. 9

**European Patent Office**

## EUROPEAN SEARCH REPORT

Application Number

EP 04 25 2690

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 043 658 A (BULL SA) 11 October 2000 (2000-10-11) * page 2, paragraph 14 * * page 3, line 57 - page 4, line 3 * * page 5, paragraph 42 * * page 11, paragraph 111 * | 1-25 | G06F9/50 |
| Y | US 5 845 116 A (YOKOYAMA TAKANORI  ET AL) 1 December 1998 (1998-12-01) * column 3, line 39 - line 64 * * column 5, line 18 - line 59 * * column 10, line 45 - line 55 * | 1-25 | |
| Y | US 5 325 526 A (PIERCE PAUL R  ET AL) 28 June 1994 (1994-06-28) * column 2, line 48 - line 58 * * column 3, line 18 - line 23 * * column 9, line 12 - line 15 * | 1-25 | |
| Y | US 5 437 032 A (WOLF JOEL L  ET AL) 25 July 1995 (1995-07-25) * column 1, line 44 - line 54 * * column 2, line 21 - line 39 * * column 3, line 20 - line 30 * * column 4, line 58 - line 65 * * column 5, line 16 - line 24 * | 1-25 | TECHNICAL FIELDS SEARCHED (Int.Cl.7) G06F |
| A | EP 1 282 038 A (MATSUSHITA ELECTRIC IND CO LTD) 5 February 2003 (2003-02-05) * page 3, paragraph 20 * | 5-9,21, 23-25 | |

The present search report has been drawn up for all claims

| Place of search | Date of completion of the search | Examiner |
|---|---|---|
| Munich | 23 August 2004 | Ebert, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 475 710 A1**

## ANNEX TO THE EUROPEAN SEARCH REPORT
## ON EUROPEAN PATENT APPLICATION NO.

EP 04 25 2690

23-08-2004

| Patent document cited in search report | | Publication date | Patent family member(s) | | Publication date |
|---|---|---|---|---|---|
| EP 1043658 | A | 11-10-2000 | FR | 2792087 A1 | 13-10-2000 |
| | | | EP | 1043658 A1 | 11-10-2000 |
| US 5845116 | A | 01-12-1998 | JP | 7282013 A | 27-10-1995 |
| | | | DE | 19513922 A1 | 19-10-1995 |
| | | | US | 6578064 B1 | 10-06-2003 |
| | | | US | 2003115241 A1 | 19-06-2003 |
| US 5325526 | A | 28-06-1994 | NONE | | |
| US 5437032 | A | 25-07-1995 | EP | 0652513 A1 | 10-05-1995 |
| | | | JP | 3414520 B2 | 09-06-2003 |
| | | | JP | 7182185 A | 21-07-1995 |
| EP 1282038 | A | 05-02-2003 | JP | 2003029989 A | 31-01-2003 |
| | | | EP | 1282038 A2 | 05-02-2003 |